# EUROPÄISCHE PATENTSCHRIFT

(11) **EP 2 544 246 B1**
(45) Veröffentlichungstag und Bekanntmachung des Hinweises auf die Patenterteilung: **20.12.2017**
(21) Anmeldenummer: 12174351.2
(22) Anmeldetag: 29.06.2012
(51) Int. Cl.: H02S 40/44

(54) **Kombi-Solarmodul**
Combo solar module
Module solaire combiné

(30) Priorität: 06.07.2011 DE 102011107302
(43) Veröffentlichungstag der Anmeldung: 09.01.2013
(73) Patentinhaber: INOTECH Kunststofftechnik GmbH, 92507 Nabburg (DE)
(72) Erfinder: Gleixner, Josef, 93047 Regensburg (DE)
(74) Vertreter: Glück Kritzenberger Patentanwälte PartGmbB

(56) Entgegenhaltungen:
- EP-A1- 2 284 910
- DE-A1- 2 523 089
- DE-B1- 2 626 958
- US-A1- 2009 044 798
- US-A1- 2010 314 081
- ZONDAG H A ET AL: "The yield of different combined PV-thermal collector designs", SOLAR ENERGY, PERGAMON PRESS. OXFORD, GB, Bd. 74, Nr. 3, 1. März 2003 (2003-03-01), Seiten 253-269, XP004439145, ISSN: 0038-092X, DOI: 10.1016/S0038-092X(03)00121-X

## Beschreibung

Die Erfindung bezieht sich auf ein Kombi-Solarmodul gemäß Oberbegriff Patentanspruch 1.

Aus der EP 2 284 910 A1 ist ein Kombi-Solarmodul gemäß Oberbegriff des Patentanspruchs 1 bekannt.

Aufgabe der Erfindung ist es, ein Kombi-Solarmodul aufzuzeigen, welches nicht nur für eine gleichzeitige Bereitstellung von Wärmeenergie und elektrischer Energie geeignet ist, sondern welches bei reduzierten Herstellungskosten und reduziertem Gesamtgewicht auch eine wesentliche Verbesserung der elektrischen Effizienz bzw. des elektrischen Wirkungsgrades des wenigstens einen Photovoltaikmoduls sicher stellt.

Zur Lösung dieser Aufgabe ist ein Kombi-Solarmodul entsprechend dem Patentanspruch 1 ausgebildet.

Ein zunehmend beachtetes Problem insbesondere bei auf Gebäudedächern montierten Solarmodulen, auch bei entsprechenden Kombi-Solarmodulen besteht darin, dass im Brandfalle ein Löschen des Bereichs unterhalb der Module, z.B. des betreffenden Gebäudedachs durch das vorhandene Solarmodul oder Kombi-Solarmodul erschwert wird und darüber hinaus durch den notwendigen Abstand zwischen dem Solarmodul und dem Bereich unterhalb der Module ein den Brand fördernder Kamineffekt Kanal entsteht. Die Erfindung sieht daher bei einer bevorzugten Ausführungsform des Kombi-Solarmoduls vor, das als Wärme transportierende Medium verwendete Wasser zugleich als Löschwasser im Brandfall bereitzustellen und beispielsweise an Düsen, z.B. Sprinklerdüsen, die zumindest an der Unterseite des Kombi-Solarmoduls vorgesehen sind auszubringen, wobei dann im Brandfall bevorzugt durch einen auf Feuer oder Rauch ansprechenden elektrischen Sensor die Leistung einer Förderpumpe im Vorlauf des Wärme transportierenden Mediums erhöht wird.

Die Erfindung besteht aus einem Kombi-Solarmodul mit den Merkmalen des Anspruchs 1. In Weiterbildung der Erfindung ist das Kombi-Solarmodul beispielsweise so ausgebildet,
dass der Träger und die Kunststofffolie aus einem UV-beständigen Kunststoff, z.B. aus PC, PP, LDPE, PVC und/oder PA bestehen,
   und/oder
dass am Basis- oder Tragelement und/oder am Träger Anschlüsse zum Verbinden des Kombi-Solarmoduls mit einer äußeren Installation und/oder mit benachbarten Kombi-Solarmodulen vorgesehen sind, und/oder
dass die Anschlüsse zumindest teilweise durch Spritzgießen erzeugt und/oder angeformt sind,
   und/oder
dass der Träger mit wenigstens einem Verstärkungsrand und/oder mit Verstärkungsrippen und/oder mit Befestigungselementen einstückig ausgebildet sind,
   und/oder dass zwischen dem wenigstens einem Photovoltaik-Modul und der Kunststofffolie eine Schicht oder Folie aus einem Material mit hoher thermischer Leitfähigkeit angeordnet ist, und/oder
dass die das Verschlusselement bildende Kunststofffolie mit dem Träger zumindest entlang des wenigstens einen Strömungskanals verklebt oder verschweißt ist,
wobei die vorgenannten Merkmale jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

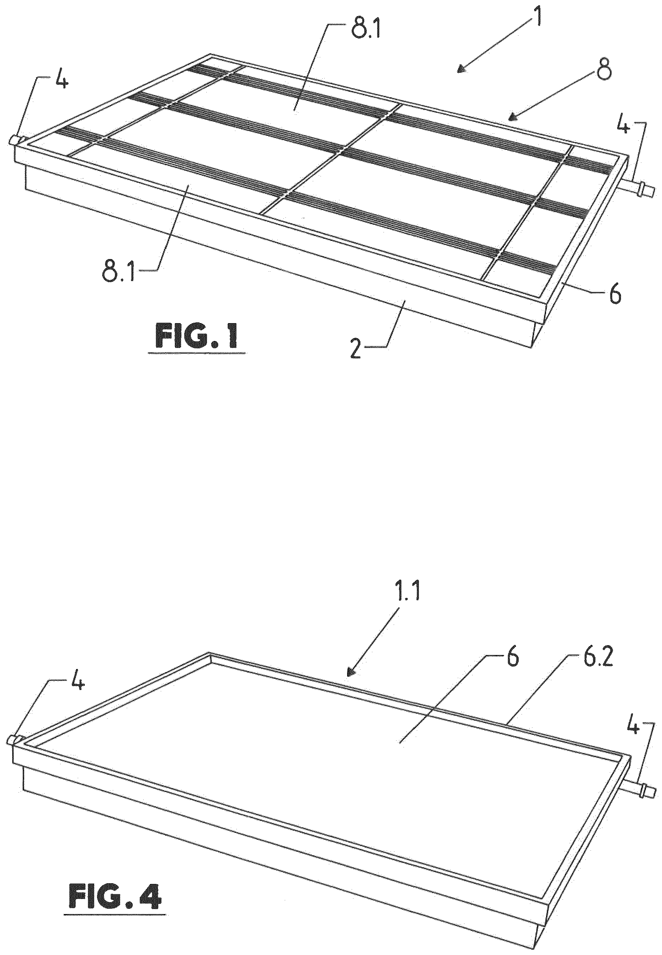

- Fig. 1: in vereinfachter perspektivischer Darstellung ein Kombi-Solarmodul (nicht Bestandteil der Erfndung);

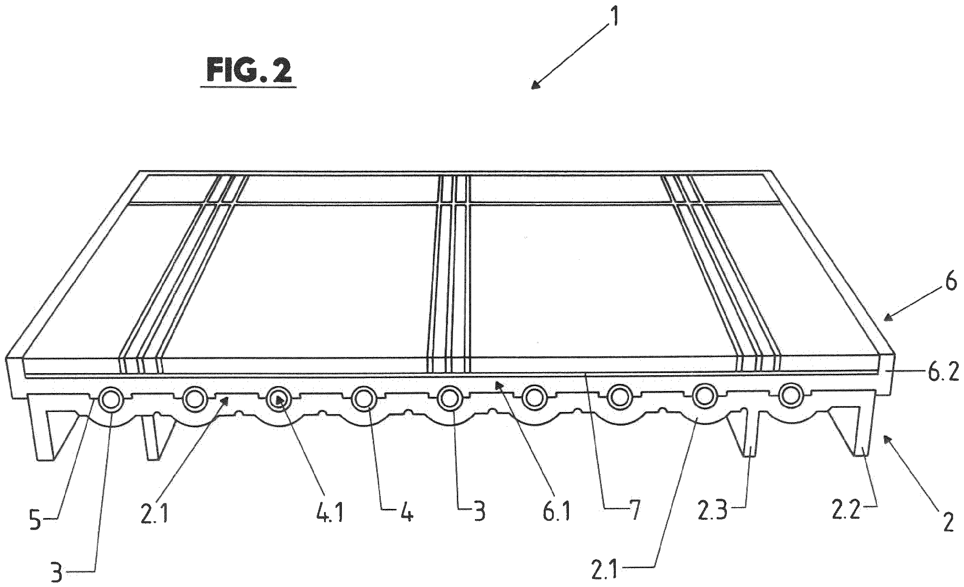

- Fig. 2: in perspektivischer Darstellung einen Längsschnitt durch das Kombi-Solarmodul der Figur 1 (nicht Bestandteil der Erfndung);
- Fig. 3: in perspektivischer Darstellung eine Draufsicht auf den als Formteil aus Kunststoff gefertigten Träger zusammen mit einem von einem Wärme transportierenden Medium durchströmbaren, mäanderartig verlegten Wärmetauscherrohrstück (nicht Bestandteil der Erfndung);
- Fig. 4: in perspektivischer Darstellung eine Draufsicht auf ein Tragelement oder Tragkörper des Kombi-Solarmoduls der Figur 1 (nicht Bestandteil der Erfndung);
- Fig. 5: in vereinfachter Darstellung und im Schnitt eine Ausführungsform des Kombi-Solarmodul gemäß der Erfindung.

Das in den Figuren allgemein mit 1 bezeichnete Kombi-Solarmodul ist beispielsweise Bestandteil einer Solar-Anlage und hierfür mit einer Vielzahl gleichartiger Module auf einem geeigneten Traggrund oder einer geeigneten Tragkonstruktion, beispielsweise auf einem Gebäudedach oder einer dortigen Tragkonstruktion befestigt. Das Kombi-Solarmodul 1 besteht aus einem als Formteil aus einem UV-beständigen Kunststoff, beispielsweise aus PC, PP, LD, PE, PVC und/oder PA hergestellten Träger 2, der in Draufsicht rechteckförmig ausgebildet ist. Im Detail bildet der Träger 2 einem oberen plattenförmigen Trägerabschnitt 2.1, einen über die Unterseite dieses Abschnittes wegstehenden Trägerrand 2.2 sowie mehrere parallel zu Umfangsseiten des Trägers 2 verlaufende, ebenfalls über die Unterseite des Trägerabschnittes 2.1 wegstehenden Stege 2.3, die ebenso wie der Trägerrand 2.2 zur Versteifung des Trägers 2 sowie als Auflage- und Montagefläche für das Kombi-Solarmodul 1 dienen.

In den Trägerabschnitt 2.1 ist eine mäanderförmige, an der Oberseite dieses Trägerabschnittes offene Nut 3 eingeformt, in die zur Aufnahme eines an den Verlauf der Nut 3 angepassten und damit ebenfalls mäanderartig verlaufenden Schlauches oder Rohrstückes 4 aus einem korrosionsbeständigen Material, beispielsweise aus Kunststoff, z.B. PC, PP, LD, PE, PVC und/oder PA eingelegt ist. Das Rohrstück 4 steht mit zwei Anschlussenden über die Umfangsfläche des Trägers 2 und damit auch des Kombi-Solarmoduls vor, und zwar an zwei einander gegenüberliegenden Schmalseiten des Trägers 2 und des Kombi-Solarmoduls 1.

Der Trägerabschnitt 2.1 ist an seiner Oberseite weiterhin so geformt, dass beidseitig an die Nut 3 mit dem an den kreisförmigen Außenquerschnitt des Rohrstücks 4 angepassten ebenfalls teilkreisförmigen Querschnitt Vertiefungen 5 gebildet sind, sodass an jeder Seite der Nut 3 ein stufenförmiger Übergang zu der Oberseite des Trägerabschnittes 2.1 besteht.

Die Tiefe der Nut 3 und der Außendurchmesser des Rohrstückes 4 sind so gewählt, dass das Rohrstück 4 nur mit einem Teil seines Umfangs in der Nut 3 aufgenommen ist, und mit einem Teilbereich seiner Umfangsfläche aber über die Oberseite des Trägers 2 bzw. des Trägerabschnittes 2.1 vorsteht.

Das Kombi-Solarmodul 1 umfasst weiterhin einen Verschlussdeckel 6, der aus einem UV-beständigen Kunststoff, beispielsweise aus PC, PP, LDPE, PVC oder PA besteht und der durch Anspritzen an den mit dem Rohrstück 4 vormontierten Träger 2 erzeugt ist, und zwar derart, dass das Rohrstück 4 mit seinem über die Oberseite des Trägerabschnittes 2.1 vorstehenden Umfangsbereich in den Kunststoff des Verschlussdeckels 6 vollständig eingebettet ist und das Material des Verschlussdeckels 6 zumindest mit der Oberseite des Trägers 2 eine materialschlüssige Verbindung ausgebildet. Hierfür wird das Material für den Verschlussdeckel 6 in Anpassung an das Material des Trägers 2 in geeigneter Weise ausgewählt.

Durch die Ausnehmungen 5 entlang der Nut 3 ist erreicht, dass das Rohrstück 4 beim Formen des Verschlussdeckels 6 sicher in der Nut 3 gehalten ist, dennoch das Rohrstück 4 auf einem großen Teil seiner Außen- oder Mantelfläche von dem Material des Verschlussdeckels 6 umschlossen wird. Beim Formen des Verschlussdeckels 6 ist der von dem Rohrstück 4 gebildete Strömungskanal 4.1 vorzugsweise mit einem Druckmedium, beispielsweise mit einem gas- und/oder dampfförmigen oder flüssigen Druckmedium gefüllt, sodass trotz des beim Formen des Verschlussdeckels 6 angewandten erheblichen Drucks der ursprüngliche, vollständige Querschnitt des Rohrstückes 4 bzw. des Strömungskanals 4.1 über die gesamte Länge dieses Rohrstückes unverändert erhalten bleibt.

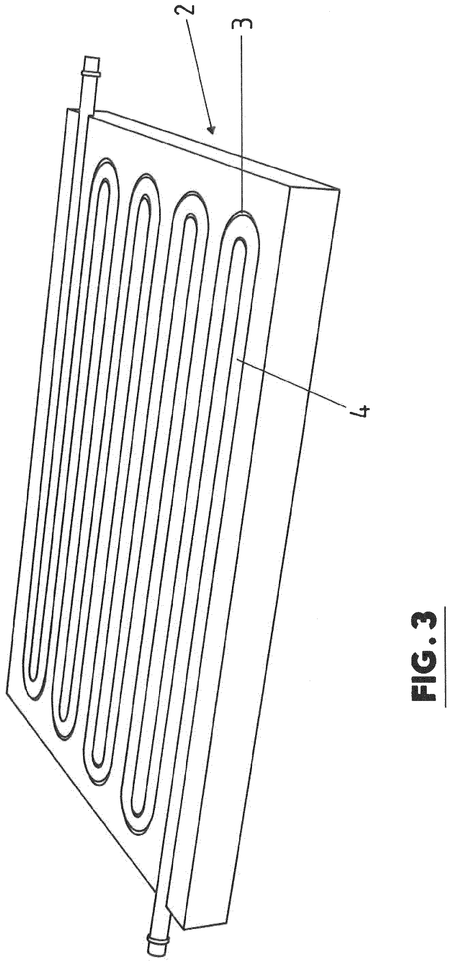

Bei dem Kombi-Solarmodul 1 bildet der Verschlussdeckel 6 nach seiner Fertigstellung einen plattenförmigen, mit der Oberseite des Trägerabschnittes 2.1 flächig verbundenen Verschlussdeckelabschnitt 6.1 und einen hauptsächlich über die dem Träger 2 abgewandte Oberseite des Verschlussdeckelabschnittes 6.1 überstehenden Verschlussdeckelrand 6.2, der mit einem für die Unterseite des Verschlussdeckelabschnittes 6.2 vorstehenden Randverlängerung den Träger 2 an seinem Trägerrand 2.1 überlappt und dadurch den Übergang zwischen der Oberseite des Trägerabschnittes 6.2 und der Unterseite des Verschlussdeckelabschnittes 6.1 nach außen hin abdeckt. Die Figur 3 zeigt nochmals in perspektivischer Darstellung den mit dem Verschlussdeckel 6 versehenen Träger 2 bzw. das aus dem Träger 2 und dem Verschlussdeckel 6 bestehende Tragelement 1.1 des Kombi-Solarmoduls 1.

In die von dem Verschlussdeckelrand 6.2 umschlossene Ausnehmung wird bei der weiteren Montage des Kombi-Solarmoduls 1 eine Folie 7 aus einem Material mit hohem Wärmeleitwert, beispielsweise eine Metallfolie, z.B. Aluminiumfolie eingelegt. Im Anschluss daran werden auf dieser Folie innerhalb des von dem Verschlussdeckelrand 6.2 umschlossenen Bereichs Photovoltaik-Einzelmodule 8.1 eingelegt und in geeigneter Weise mechanisch und elektrisch montiert, sodass diese Einzelmodule ein Gesamtphotovoltaik-Modul 8 bilden. Die Zwischenschicht oder Folie 7 dient u.a. der verbesserten Wärmeübertragung sowie einer gleichmäßigen Wärmeverteilung über die gesamte Fläche des Photovoltaikmoduls 8.

An der Unterseite des Kombi-Solarmoduls bzw. des Trägers 2 sind die erforderlichen Komponenten für die elektrische Verbindung der Einzelmodule 8.1 zu dem Gesamtmodul 8 und/oder für die elektrische Verbindung des Kombi-Solarmoduls 1 mit weiteren Komponenten und/oder Modulen und/oder mit der elektrischen Installation einer Solaranlage vorgesehen.

Das Kombi-Solar-Modul 1 ist so ausgeführt, dass es sowohl elektrisch, als auch hinsichtlich des Strömungskanal 4.1 durchströmenden Wärme transportierenden Mediums durch einfache Steck- oder Flanschverbindungen mit angrenzenden Kombi-Solarmodulen und/oder mit einer äußeren Installation verbunden werden kann. Weiterhin besteht die Möglichkeit, an der Unterseite des Kombi-Solarmoduls 1 bzw. des Trägers 2 und insbesondere auch in von dem Trägerrand 2.2 und den Stegen 2.3 gebildeten Ausnehmungen oder Vertiefungen Akkumulatoren zur Speicherung des von dem Photovoltaikmodul 8 erzeugten Stromes vorzusehen, vorzugsweise Hochleistungsakkumulatoren, z.B. Lithium-Akkumulatoren.

Der Träger 2 ist vorzugsweise mit nicht dargestellten Befestigungsanschlüssen zur mechanischen Montage des Kombi-Solarmoduls 1 und/oder aber mit Fußelementen ausgebildet, die bei eine einfache Montage der Kombi-Solarmodule 1 auf einer ebenen Fläche oder einer nur geringfügig geneigten Fläche die notwendige Neigung der Kombi-Solarmodule gewährleisten.

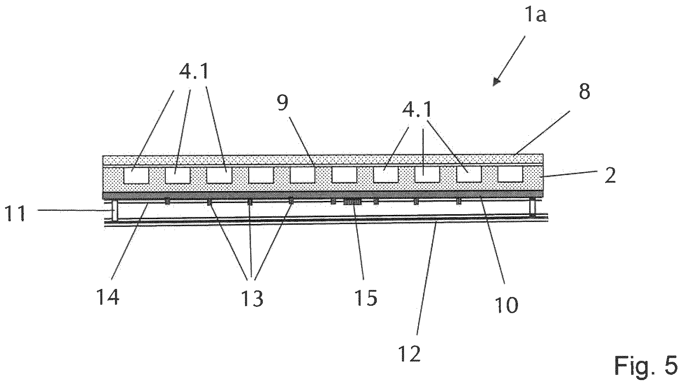

Die Figur 5 zeigt in vereinfachter Darstellung und im Schnitt eine Ausführungsform eines erfindungsgemäßen Kombi-Solar-Moduls 1a, welches u.a. aus dem als Formteil aus Kunststoff hergestellten Träger 2, aus einer auf den Träger 2 aufgebrachten und mit diesem verbundenen, beispielsweise durch Kleben und/oder Schweißen, z.B. Laserschweißen verbundenen Folie 9 und aus dem auf der Folie 9 angeordneten Photovoltaikmodul 8 besteht, welch letzteres vorzugsweise wiederum mehrere Einzelmodule 8.1 aufweist. In dem als Formteil aus Kunststoff hergestellten Träger 2 sind die Strömungskanäle 4.1 in Form von Nuten eingeformt, die einen Gesamtkanal oder mehrere Einzelkanäle bilden und an der Oberseite des Trägers 2 durch die Folie 9 dicht verschlossen sind. Die Folie 9 ist elastisch ausgebildet, sodass durch den Druck des in den Strömungskanälen 4.1 geführten flüssigen Wärme transportierenden Mediums (vorzugsweise Wasser, ggf. mit Frostschutzzusätzen) die von der Folie 9 gebildete Wandung jedes Strömungskanals 4.1 dicht gegen die dem Träger 2 zugewandte Unterseite des Photovoltaikmoduls 8 bzw. der Einzelmodule 8.1 angepresst anliegt. Hierdurch ist u.a. ein optimaler Wärmeübergang zwischen dem Wärme transportierenden Medium in Strömungskanälen 4.1 und dem Photovoltaikmodul 8 gewährleistet, und zwar auch dann, wenn der Träger 2 an seiner die Strömungskanäle 4.1 bzw. die entsprechenden Nuten aufweisenden Oberseite nicht vollständig eben ausgeführt ist.

Zur Versteifung des Kombi-Solarmoduls 1a kann es zweckmäßig sein, an der Unterseite eine versteifende Tragplatte 10 oder einen entsprechenden Rahmen aus einem metallischen Werkstoff vorzusehen, an welcher bzw. an welchem dann das Kombi-Solarmodul 1a über fußartige Befestigungselemente 11 mit Abstand an einem Untergrund 12, beispielsweise an der Außenfläche eines Gebäudedachs befestigt werden kann.

Mit 13 sind Sprinklerdüsen bezeichnet, die an der der Befestigungsfläche 12, beispielsweise dem Gebäudedach zugewandten Unterseite des Kombi-Solarmoduls vorgesehen sind und aus denen dann bei einem eventuellen Brand das als Wärme transportierendes Medium dienende Wasser als Löschwasser automatisch auf die Befestigungsfläche 12 ausgebracht wird. Diese Sprinklerdüsen 13 können ohne zusätzlichen Aufwand vorgesehen werden, zumal als Wärme transportierendes Medium ohnehin Wasser verwendet wird und die entsprechenden Anschlüsse an die Kombi-Solarmodule 1a für das Zuführen des Wärme transportierenden Mediums vorhanden sind und problemlos über Leitungen 14 mit den Sprinklerdüsen 13 verbunden werden können.

Mit 15 ist ein Sensor bezeichnet, der ebenfalls an der Unterseite des Kombi-Solarmoduls 1a vorgesehen ist und im Brandfall ein elektrisches Steuersignal absetzt, beispielsweise zum Aktivieren der Sprinklerdüsen 13 oder eines die Sprinklerdüsen an den Zulauf des Wärme transportierenden Mediums anschließenden Ventils und/oder zur Auslösung eines entsprechenden Alarms. Das Signal des Sensors 15 wird bevorzugt auch dazu verwendet, um die Förderleistung einer im Vorlauf für das Wärme transportierende Medium befindlichen Pumpe im Brandfall zu erhöhen.

Grundsätzlich besteht die Möglichkeit zwischen dem Photovoltaikmodul 8 und der Folie 9 die Zwischenfolie 7 aus dem Material mit hoher Wärmeleitfähigkeit vorzusehen.

Insbesondere dann, wenn anstelle der Tragplatte 10 ein Rahmen verwendet wird, der zumindest den größeren Teil der Fläche der Unterseite des Trägers 2 frei lässt, können auch die Strömungskanäle 4.1 im Brandfalle zum Ausbringen des als Löschmedium dienenden Wärme transportierenden Mediums genutzt werden, und zwar dadurch, dass der Träger 2 durch Hitzeeinwirkung schmilzt und dadurch die Strömungskanäle 4.1 zur Befestigungsfläche 12 hin sich öffnen.

Im Verwendungsfall sind die Kombi-Solarmodule 1 bzw. 1a bzw. deren Photovoltaikmodule 8 in der üblichen Weise an die äußere elektrische Installation angeschlossen. Die von dem Wärme transportierenden Medium, beispielsweise von Wasser mit Frostschutzzusätzen, durchströmten Strömungskanäle 4.1 der die Solaranlage bildenden Kombi-Solarmodule 1 bzw. 1a sind beispielsweise in Serie miteinander verbunden an eine Wärmepumpe oder an eine andere Anlage angeschlossen, die eine Nutzung der im Wärme transportierenden Medium enthaltene Wärmeenergie und/oder ein Erhitzen des Wärme transportierenden Mediums ermöglicht.

Das Kombi-Solarmodul 1 bzw. 1a bzw. die mit einer Vielzahl solcher Module hergestellten Solaranlagen bieten erhebliche Vorteile. So besteht zum einen die Möglichkeit, die Photovoltaikmodule 8 bei intensiver Sonneneinstrahlung, insbesondere in den Sommermonaten, also in den bezüglich der Erzeugung des elektrischen Stromes Hauptertragszeiten, durch das die Strömungskanäle 4.1 durchströmende Wärme transportierende Medium zu kühlen und dadurch den Wirkungsgrad der Photovoltaikmodule 8 zu steigern. Es hat sich nämlich gezeigt, dass der Wirkungsgrad von Photovoltaikmodulen mit steigender Temperatur stark abnimmt. Der entsprechende Temperaturkoeffizient beträgt beispielsweise -0,5%/°C, was bedeutet, dass ein Photovoltaikmodul, welches bei 25°C beispielsweise eine Nennleistung von 200 W erreicht, bei einer Temperatur von 90° nur noch eine Leistung von 135W erbringt, d.h. fast ein Drittel der Leistung und somit auch des Stromertrages verloren geht. Mit dem die Strömungskanäle 4.1 durchströmenden und als Kühlmittel wirkenden Medium kann auch bei hohen Umgebungstemperaturen die Temperatur des Photovoltaikmoduls 8 auf einen für eine optimale Stromausbeute erforderlichen Temperaturwert durch Kühlen gehalten werden. Die mit dem Wärme transportierenden Medium abgeführte Wärmeenergie wird genutzt, beispielsweise zum Aufheizen von Brauchwasser, und/oder gespeichert.

In der kalten Jahreszeit wird das die Strömungskanäle 4.1 durchströmende Wärme transportierende Medium zum Heizen der Photovoltaikmodule 8 verwendet werden, um beispielsweise eine den Wirkungsgrad dieser Module beeinträchtigende Eisbildung auf der Modulaußenfläche und/oder dort vorhandenen Schnee durch Abtauen zu entfernen.

Die wesentlichen Vorteile des Kombi-Solarmoduls 1a lassen sich, wie folgt, zusammenfassen:
Zeitgleiche Erzeugung von Strom und Warmwasser;
Effizienzerhaltung und/oder Steigerung durch Kühlen des Photovoltaikmoduls 8 oder der Einzelmodule 8.1 bei Umgebungstemperaturen größer 25°C;
Gestaltungsfreiheit des Kombi-Solarmoduls 1 und insbesondere auch des Trägers 2 in Form und Größe durch Kunststoff-Spritzguss, z.B. auch in der Form, dass eine Befestigung des Kombi-Solarmoduls 1 auf einem Gebäudedach in gleicher Weise wie die dortige Befestigung von Flachziegeln möglich ist;
Möglichkeit einer Wand- und/oder Dachmontage des Kombi-Solarmoduls bei entsprechender Form und Größe;
Gewichtsersparnis durch die Verwendung von Kunststoff im Vergleich zu metallischen Materialien;
Speicherung von nicht benötigtem Strom im Akkumulator des Kombi-Solarmoduls 1 bzw. 1a; Erwärmen des Kombi-Solarmoduls bzw. des Photovoltaikmoduls in der kalten Jahreszeit durch das Wärme transportierende Medium zur Steigerung des Wirkungsgrades;
Möglichkeit der Verwendung von Photovoltaikmodulen 8 aus Glas oder in Folienform; leichte Verlegetechnik und Montage an Dächern und Wänden;
verbesserte und vereinfachte Führung von Kabeln und Rohrleitungen, insbesondere durch Anspritzen von Stecker- und/oder Verbindungsgeometrien am Träger 2;
Steigerung der Lebensdauer des Photovoltaikmoduls 8 und der Einzelmodule 8.1 durch Vermeidung einer Erwärmung.
Weiterhin ergibt sich durch den Einsatz von Kunststoff und bewehrten Prozessen auch ein optimales Preis-Leistungs-Verhältnis.

Zusätzliche Vorteile des Kombi-Solarmoduls 1a bestehen u.a. darin, dass durch die Verwendung der Folie 9 zwischen dem Träger 2 und dem Photovoltaikmodul 8 der Wärmeübergang zwischen dem Wärme transportierenden Medium und dem Photovoltaikmodul 8 verbessert wird, dass die Folie 9 nur eine geringe Dicke aufweist, wodurch ohnehin der Wärmeübergang zum Photovoltaikmodul 8 verbessert wird. Weiterhin ergibt sich durch die Folie 9 eine weitere Vereinfachung des Kombi-Solarmoduls 1a in konstruktiver und herstellungstechnischer Hinsicht. Ein weiterer Vorteil des Kombi-Solarmoduls 1a besteht in einer weiteren Verringerung des Gesamtgewichts, und zwar dadurch, dass anstelle des Verschlussdeckels 6 die Folie 9 verwendet ist.

### Bezugszeichenliste

- 1: Kombi-Solarmodul
- 1.1: Trag- oder Basiselement
- 2: Träger
- 2.1: Trägerabschnitt
- 2.2: Trägerrand
- 2.3: Trägersteg
- 3: Nut
- 4: Rohrstück
- 4.1: Strömungskanal im Rohrstück 4
- 5: Ausnehmung
- 6: Verschlussdeckel
- 6.1: Verschlussdeckelabschnitt
- 6.2: Verschlussdeckelrand
- 7: Folie aus Wärme leitenden Material
- 8: Photovoltaikmodul
- 8.1: Photovoltaikeinzelmodul
- 9: Folie
- 10: Tragplatte
- 11: Befestigungselement
- 12: Befestigungsfläche
- 13: Sprinklerdüse
- 14: Leitung
- 15: Sensor

## Patentansprüche

1. Kombi-Solarmodul mit einem flachen, plattenförmigen oder im Wesentlichen plattenförmigen Basis- oder Tragelement (1.1), mit wenigstens einem in dem Basis- oder Tragelement (1.1) ausgebildeten Strömungskanal (4.1) für ein Wärme transportierendes Medium sowie mit wenigstens einem Photovoltaikmodul (8, 8.1) an einer Oberseite des Basis- oder Tragelementes (1.1), wobei das Basis- oder Tragelement (1.1) aus Kunststoff gefertigt ist und aus einem als Formteil aus Kunststoff hergestellten Träger (2) sowie aus einem die Oberseite des Basis- oder Tragelementes (1.1) bildenden Verschlusselement besteht, wobei der wenigstens eine Strömungskanal (4.1) zwischen dem Träger (2) und dem Verschlusselement ausgebildet ist, **dadurch gekennzeichnet, dass** das Verschlusselement eine elastische Kunststofffolie (9) ist, wobei die das Verschlusselement bildende elastische Kunststofffolie mit dem Träger (2) zumindest entlang des wenigstens einen Strömungskanals (4.1) verbunden ist, wobei in dem als Formteil aus Kunststoff hergestellten Träger (2) die Strömungskanäle (4.1) in Form von Nuten eingeformt sind und einen Gesamtkanal oder mehrere Einzelkanäle bilden und an der Oberseite des Trägers (2) durch die elastische Kunststofffolie (9) dicht verschlossen sind.

2. Kombi-Solarmodul nach Anspruch 1, **dadurch gekennzeichnet, dass** der Träger (2) und die Kunststofffolie (9) aus einem UV-beständigen Kunststoff, z.B. aus PC, PP, LDPE, PVC und/oder PA bestehen.

3. Kombi-Solarmodul nach einem der vorhergehenden Ansprüche, **dadurch gekennzeichnet, dass** am Basis- oder Tragelement (1.1) Anschlüsse zum Verbinden des Kombi-Solarmoduls (1) mit einer äußeren Installation und/oder mit benachbarten Kombi-Solarmodulen vorgesehen sind, wobei diese Anschlüsse vorzugsweise zumindest teilweise durch Spritzgießen erzeugt und/oder angeformt sind.

4. Kombi-Solarmodul nach einem der vorhergehenden Ansprüche, **dadurch gekennzeichnet, dass** der Träger (2) mit wenigstens einem Verstärkungsrand (6.2, 2.2) und/oder mit Verstärkungsrippen (2.3) und/oder mit Befestigungselementen einstückig ausgebildet ist.

5. Kombi-Solarmodul nach einem der vorhergehenden Ansprüche, **dadurch gekennzeichnet, dass** zwischen dem wenigstens einem Photovoltaik-Modul (8, 8.1) und der Kunststofffolie (9) eine Schicht oder Folie (7) aus einem Material mit hoher thermischer Leitfähigkeit angeordnet ist.

6. Kombi-Solarmodul nach einem der vorhergehenden Ansprüche, **dadurch gekennzeichnet, dass** die Kunststofffolie (9) mit dem Träger (2) zumindest entlang des wenigstens einen Strömungskanals (4.1) verklebt oder verschweißt ist.

## Claims

1. A combined solar module with a flat, plate-shaped or essentially plate-shaped base or support element (1.1), with at least one flow channel (4.1), formed in the base or support element (1.1), for a heat-transporting medium and with at least one photovoltaic module (8, 8.1) at the upper side of the base or support element (1.1), wherein the base or support element (1.1) is produced from plastic and consists of a support (2) produced as a moulded part from plastic and a closure element forming the upper side of the base or support element (1.1), wherein the at least one flow channel (4.1) is formed between the support (2) and the closure element, **characterised in that** the closure element is an elastic plastic film (9), wherein the plastic film forming the closure element is connected to the support (2) at least along the at least one flow channel (4.1), wherein the flow channels (4.1) are moulded-in as grooves into the support (2) produced as a moulded part from plastic and form a whole channel or a plurality of individual channels and are sealed tight at the upper side of the support (2) by the elastic plastic film (9).

2. The combined solar module according to claim 1, **characterised in that** the support (2) and the plastic film (9) are made from a UV-resistant plastic, e.g. from PC, PP, LDPE, PVC and/or PA.

3. The combined solar module according to any one of the preceding claims, **characterised in that** connections are provided, on the base or support element (1.1), for connecting the combined solar module (1) to an external installation and/or to adjacent combined solar modules, wherein these connections are preferably produced and/or formed at least partially by injection moulding.

4. The combined solar module according to any one of the preceding claims, **characterised in that** the support (2) is formed in one piece with at least one reinforcement edge (6.2, 2.2) and/or with reinforcement ribs (2.3) and/or with reinforcement members.

5. The combined solar module according to any one of the preceding claims, **characterised in that** a layer or film (7) made of a material with a high thermal conductivity is arranged between the at least one photovoltaic module (8, 8.1) and the plastic film (9).

6. The combined solar module according to any one of the preceding claims, **characterised in that** the plastic film (9) is adhesively bonded or welded to the support (2) at least along the at least one flow channel (4.1).

## Revendications

1. Module solaire combiné comprenant un élément de base ou de support (1.1) plat, en forme de plaque ou essentiellement en forme de plaque, comprenant au moins un canal d'écoulement (4.1) formé dans l'élément de base ou de support (1.1) pour un fluide transportant de la chaleur ainsi qu'au moins un module photovoltaïque (8, 8.1) sur une face supérieure de l'élément de base ou de support (1.1), dans lequel l'élément de base ou de support (1.1) est fabriqué en plastique et est composé d'un support (2) fabriqué en plastique en tant que pièce moulée ainsi que d'un élément de fermeture formant la face supérieure de l'élément de base ou de support (1.1), dans lequel l'au moins un canal d'écoulement (4.1) est formé entre le support (2) et l'élément de fermeture, **caractérisé en ce que** l'élément de fermeture est un film plastique élastique (9), dans lequel le film plastique élastique formant l'élément de fermeture est relié au support (2) au moins le long de l'au moins un canal d'écoulement (4.1), dans lequel dans le support (2) fabriqué en plastique en tant que pièce moulée, les canaux d'écoulement (4.1) sont formés sous forme de rainures et forment un canal global ou plusieurs canaux individuels et sont fermés de manière étanche par le film plastique élastique (9) sur la face supérieure du support (2).

2. Module solaire combiné selon la revendication 1, **caractérisé en ce que** le support (2) et le film plastique (9) sont composés d'un plastique résistant aux UV, en particulier en PC, PP, LDPE, PVC et/ou PA.

3. Module solaire combiné selon l'une des revendications précédentes, **caractérisé en ce que** des raccords pour relier le module solaire combiné (1) à une installation extérieure et/ou à des modules solaires combinés voisins sont prévus sur l'élément de base ou de support (1.1), dans lequel ces raccords sont produits et/ou moulés de préférence au moins partiellement par moulage par injection.

4. Module solaire combiné selon l'une des revendications précédentes, **caractérisé en ce que** le support (2) est formé d'une seule pièce avec au moins un bord de renfort (6.2, 2.2) et/ou avec des nervures de renfort (2.3) et/ou avec des éléments de fixation.

5. Module solaire combiné selon l'une des revendications précédentes, **caractérisé en ce qu'**une couche ou un film (7) dans un matériau à conductivité thermique élevée est placé(e) entre l'au moins un module photovoltaïque (8, 8.1) et le film plastique (9).

6. Module solaire combiné selon l'une des revendications précédentes, **caractérisé en ce que** le film plastique (9) est collé ou soudé au support (2) au moins le long de l'au moins un canal d'écoulement (4.1).
